# EUROPÄISCHE PATENTSCHRIFT

(11) **EP 0 819 719 B1**
(45) Veröffentlichungstag und Bekanntmachung des Hinweises auf die Patenterteilung: **24.11.1999**
(21) Anmeldenummer: 97109460.2
(22) Anmeldetag: 11.06.1997
(51) Int. Cl.: C08G 77/38, C09D 5/03, C09D 7/06, C09D 7/12

(54) **Organosiloxanylderivate von Alkandiolmonovinylethern, Verfahren zu deren Herstellung, deren Modifizierung und deren Verwendung als Lackzusatzstoffe**
Organosiloxanyl derivatives of alkanediol monovinyl ether, process for preparing and modification, their use as additive in paints
Dérivés organosiloxaniliques d'éthers monovinyliques d'alcanediols, leur préparation et modification, leur emploi comme additif dans les peintures

(30) Priorität: 22.06.1996 DE 19625075
(43) Veröffentlichungstag der Anmeldung: 21.01.1998
(73) Patentinhaber: Th. Goldschmidt AG, 45127 Essen (DE)
(72) Erfinder: Feldmann-Krane, Georg, Dr., 45472 Mülheim (DE); Josten, Wolfgang, Dr., 45133 Essen (DE); Langenhagen, Rolf-Dieter, 45529 Hattingen (DE); Reusmann, Gerhard, Dr., 48147 Münster (DE); Silber, Stefan, Dr., 47804 Krefeld (DE); Spratte, Werner, Dr., 58455 Witten (DE); Stadtmüller, Stefan, Dr., 45141 Essen (DE)

(56) Entgegenhaltungen:
- EP-A- 0 446 938
- EP-A- 0 845 488

## Beschreibung

Die Erfindung betrifft neuartige Organosiloxanylderivate von Alkandiolmonovinylethern, ein Verfahren zur Herstellung dieser Derivate, deren Verwendung zur Herstellung von organomodifizierten Siloxanen sowie deren Verwendung als Lackzusatzstoffe.

Hydroxyalkylfunktionelle Polysiloxane sind handelsüblich (z. B. Tegopren HSi 2111, Th. Goldschmidt AG) und können nach bekannten Verfahren einfach technisch hergestellt werden. Derartige Verbindungen dienen beispielsweise als Ausgangsmaterialien zur Synthese von Siliconpolyestern (US-A-5 488 123). Dem Stand der Technik entsprechen gleichfalls Verfahren zur Darstellung von Organopolysiloxanen, welche im Mittel mindestens einen end-oder seitenständig gebundenen Rest -(CH₂)₃OCH₂CH(X)CH₂OH haben, wobei X beispielsweise ein Hydroxy-, Alkoxy- oder Aminrest sein kann (DE-C-32 15 317).

Bei diesen Umsetzungen von Wasserstoffsiloxanen mit 1-Alkenylalkoholen kommt es jedoch als Nebenreaktion zu der ungewünschten Umlagerung zum für Hydrosilylierungen unreaktiven 2-Alkenol. Daher muß bei diesen Hydrosilylierungsreaktionen üblicherweise ein hoher Überschuß der Alkenole eingesetzt werden, der nach Reaktionsende destillativ wieder entfernt wird. Diese Problematik stellt sich bekanntermaßen auch bei der Hydrosilylierungsreaktion von Wasserstoffsiloxanen an Allylalkoholalkoxylate (US-A-4 083 856). Auch hier entziehen sich nach Umlagerung der Doppelbindung entstehende Propenylpolyether nahezu vollständig der Hydrosilylierungsreaktion und verbleiben im Reaktionsgemisch. Daher muß zum einen, um einen vollständigen Umsatz der Si-H-Komponente zu erreichen, von einem Überschuß der Olefinkomponente ausgegangen werden, wobei im Einzelfall solche Überschüsse im Bereich bis zu 50 Molprozent liegen können. Zur Herstellung der reinen Hydrosilylierungsaddukte wäre es auch hier erforderlich, das Reaktionsprodukt durch Destillation vom Umlagerungsprodukt zu reinigen. Letzteres ist jedoch insbesondere bei höhermolekularen Olefinkomponenten technisch nicht möglich.

Der Einsatz von 1,4-Butandiolmonovinylether als Anlagerungsprodukt an Silane, ist in US-A-5 384 342 bereits erwähnt. Dabei wird allerdings die Bindung über eine Silicium-Sauerstoffbindung gebildet, so daß die freie Doppelbindung noch für UV-induzierte Vernetzungsreaktionen zur Verfügung steht. Es entstehen auf diese Art und Weise jedoch keine hydroxyalkylfunktionellen Silanderivate.

Gegenstand der vorliegenden Erfindung sind nun Organosiloxanylderivate mit über Kohlenstoff an Silicium gebundenem Ethylhydroxyalkylether, deren Herstellung und deren Verwendung als Lackrohstoffe, sowie deren Einsatz als Intermediate für die Darstellung von Siliconpolyethern, -polyestern, -polyurethanen, -acrylaten und -isocyanaten.

Die erfindungsgemäßen Verbindungen entsprechen nun der allgemeinen Formel: 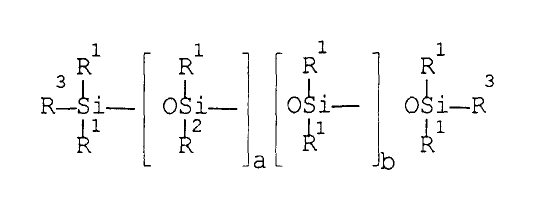 wobei
- R¹ =: gleiche oder verschiedene aliphatische oder aromatische Kohlenwasserstoffreste sind,
- R² =: CH₂CH₂O(CR⁴R⁵)ₓOH ist, wobei
R⁴ und R⁵ gleiche oder verschiedene Reste sein können und jeweils einen H- oder Alkylrest, verzweigt oder unverzweigt, mit bis zu insgesamt 12 C-Atomen bedeuten und x einen Wert von 2 bis 11 hat,
- R³ =: R² oder R¹ ist,
- a =: 1 bis 50 und
- b =: 0 bis 500 ist.

Es ist dem Fachmann geläufig, daß die Verbindungen in Form eines Gemisches mit einer im wesentlichen durch statistische Gesetze geregelten Verteilung vorliegen. Die Werte für die Indices a und b stellen deshalb Mittelwerte dar.

Derartige Verbindungen sind beispielsweise wiederum nützliche Rohstoffe für weitere - dem Stand der Technik entsprechende - Umsetzungen zu Folgeprodukten. In erster Linie sind dabei Umsetzungen zu Siliconpolyethern, -polyestern, -polyurethanen, -acrylaten oder -isocyanaten zu nennen.

Die erfindungsgemäßen Organosiloxanylderivate sind leicht zugänglich über übergangsmetallkatalysierte Hydrosilylierungsreaktionen von Organosiloxanylderivaten an Alkandiolmonovinylether.

Sie können in einfacher Weise hergestellt werden, indem man wasserstoffunktionelle Siloxane der allgemeinen Formel 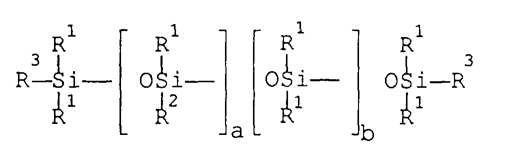 wobei
- R² =: H ist,
und die übrigen Indices die obengenannte Bedeutung haben,
an Alkandiolmonovinylether der allgemeinen Formel 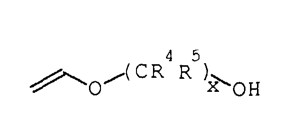 wobei R⁴ und R⁵ gleiche oder verschiedene Reste sein können und jeweils einen H- oder Alkylrest, verzweigt oder unverzweigt, mit bis zu insgesamt 12 C-Atomen bedeuten und x einen Wert von 2 bis 11 hat,
in Gegenwart eines an sich bekannten Hydrosilylierungskatalysators (Platin- oder Rhodiumkatalysator) anlagert.

Bevorzugte Beispiele für die Reste R⁴ und R⁵ sind Wasserstoff und Alkylreste von C1 bis C8. Insbesondere bevorzugt ist R⁴ = R⁵ = Wasserstoff. x ist vorzugsweise 2 bis 6. Insbesondere bevorzugt ist x = 4.

Überraschenderweise wurde bei der Hydrosilylierungsreaktion mit Alkandiolmonovinylethern festgestellt, daß bei diesen Reaktionen kein Überschuß der olefinischen Komponente notwendig ist, sondern diese äquimolar zur SiH-Komponente eingesetzt werden kann, da die sonst bei Hydrosilylierungsreaktionen auftretende Umlagerung der Doppelbindung (z. B. bei Allylgruppen) im Falle der Vinyldoppelbindung in den beschriebenen Beispielen ausgeschlossen ist.

Beispiele erfindungsgemäßer Substanzen sind:

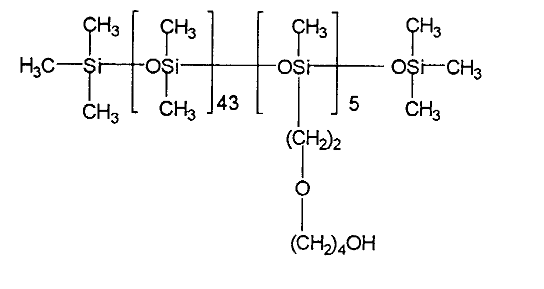

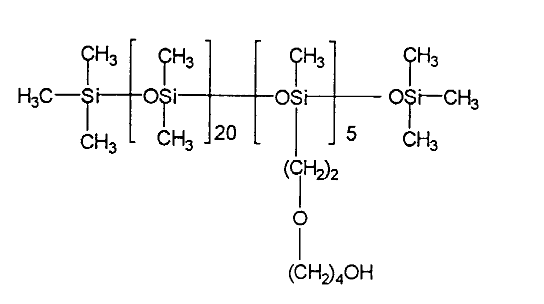

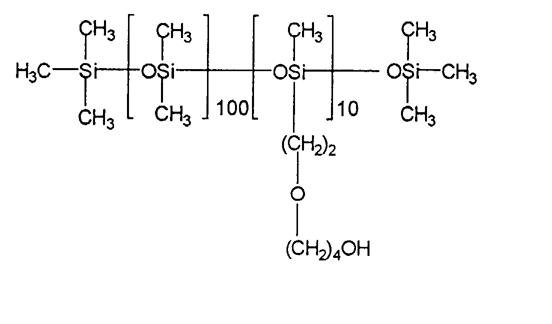

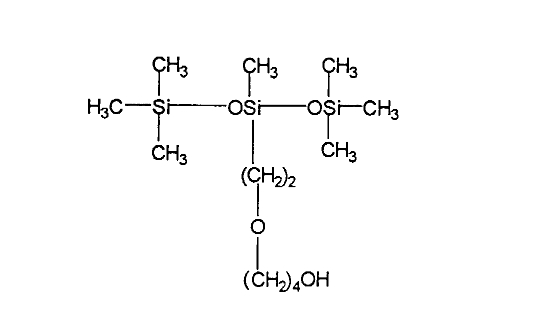

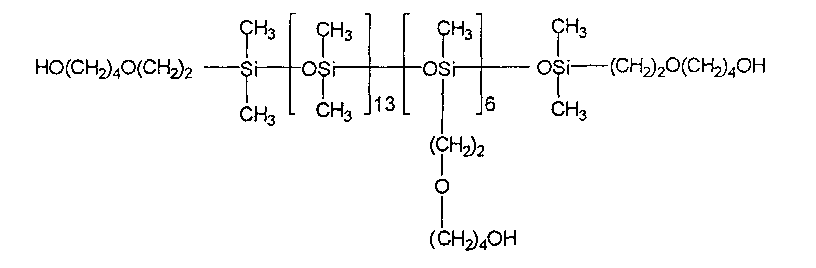

Die für die Umsetzungen mit Vinylhydroxyalkylether eingesetzten Siloxane können beispielsweise folgende Struktur aufweisen:

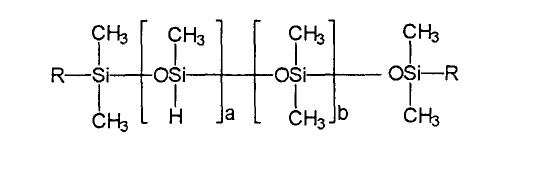

| Verbindung | a = | b = | R |
|---|---|---|---|
| 1 | 1 | o | Me |
| 2 | 5 | 13 | Me |
| 3 | 5 | 43 | Me |
| 4 | 4,5 | 20,5 | Me |
| 5 | 25 | 75 | Me |
| 6 | 10 | 80 | H |
| 7 | 10 | 100 | Me |

Die erfindungsgemäßen Organosiloxanylderivate sind wiederum wertvolle Ausgangsverbindungen für weitere - dem Stand der Technik entsprechende - Umsetzungen zu Folgeprodukten. In erster Linie sind dabei Umsetzungen zu Siliconpolyethern, -polyestern, polyurethanen, -acrylaten oder -isocyanaten zu nennen.

Beispiele solcher organomodifizierter Organosiloxane sind

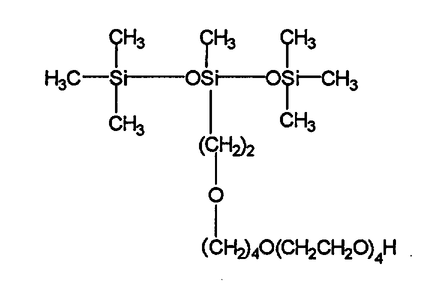

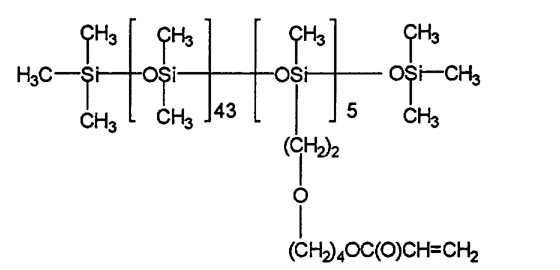

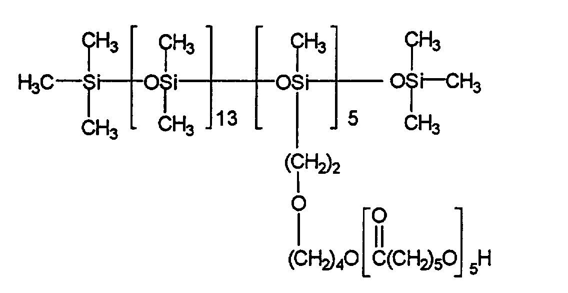

Die erfindungsgemäßen Verbindungen sowie deren Derivate können beispielsweise als Zusatzstoffe in wasserbasierenden, lösemittelbasierenden oder pulverförmigen Lacken oder Druckfarben - unter anderem als Entlüfter, Gleit- und Verlaufmittel usw. - Verwendung finden. Typische Einsatzkonzentrationen liegen zwischen 0,01 und 15 Gew.-%.

Überraschenderweise ist die Verwendung der erfindungsgemäßen Verbindungen besonders geeignet zur Herstellung schmutzabweisender Überzüge. Sie können beispielsweise zur Herstellung von Antigraffiti-Überzügen verwendet werden.

Die Problematik von in der Öffentlichkeit erstellten Graffitis hat in den letzten Jahren immer wieder die Öffentlichkeit konfrontiert. Meist sind öffentliche Gebäude und Verkehrsmittel betroffen. Da die Entfernung in den meisten Fällen nicht durch einfaches Abwaschen erfolgen kann, ist meistens ein arbeits-und kostenaufwendiges neues Streichen der mit Graffiti versehenden Wände nötig.

Schutzüberzüge, die fluorhaltige Polymere enthalten, wie beispielsweise in US-A-4 929 666 und US-A-5 006 624 beschrieben, erzielen die schmutzabweisenden Eigenschaften durch die Erniedrigung der Oberflächenspannung.

Polysiloxanverbindungen ergeben ebenfalls eine Verringerung der Oberflächenspannung. So werden die in der DE-A-26 10 372 beschriebenen Lösungspolymerisate, die in einem Gemisch aus organischen Lösungsmitteln und Alkylwasserstoffpolysiloxanen hergestellt werden, zum Imprägnieren von Textilien eingesetzt.

Durch Copolymerisation von (Meth)acrylmonomeren mit Epoxyfunktionen in Gegenwart von Silanolen wird gemäß US-A-5 077 350 ein Polymer für Pulverlacke hergestellt. Aufgrund der hohen Reaktivität der eingesetzten, mindestens zwei Si-OH-Funktionen enthaltenden Silanole ist nur mit speziellen Monomeren eine Copolymerisation ohne Eintreten einer Gelierung möglich.

In der EP-A-0 603 561 werden polydimethylsiloxanhaltige Bindemittel beschrieben, die durch radikalisch initiierte Polymerisation von (Meth)acrylatmonomeren in Gegenwart von α,ω-funktionellen Polysiloxanen erhalten werden. Aufgrund der geringen Funktionalität der Polysiloxane können Unverträglichkeiten mit Lacksystemen auftreten, die Systeme zeigen ungenügende Resistenz gegen Verschmutzungen wie z. B. gegen Filzstifte.

In der DE-A-35 35 283 werden polyestergruppenhaltige Polysiloxane für Lacke und Formmassen beschrieben. Das Polysiloxan erzeugt eine antiadhäsive Eigenschaft der Lacke oder Formmassen. Durch die schlechtere Wirksamkeit der Polysiloxane ist eine sehr hohe Einsatzkonzentration nötig, so daß andere Lackeigenschaften negativ beeinflußt werden.

Eine weitere Aufgabe der Erfindung ist daher die Bereitstellung von Überzugskomponenten, die für schmutzabweisende Beschichtungen geeignet sind und ihre schmutzabweisende Wirkung über einen langen Zeitraum von z. B. mehreren Jahren beibehalten.

Es hat sich gezeigt, daß diese Aufgabe gelöst werden kann durch Überzugsmittel, die als Lackbestandteil in Konzentrationen von 0,01 bis 15 %, bevorzugt von 1 bis 10 %, mit Alkandiolmonovinylether modifizierte Organosiloxanderivate enthalten.

Einen weiteren Gegenstand der Erfindung bilden daher für Überzugsmittel geeignete modifizierte Polysiloxane.

Die erfindungsgemäßen Verbindungen können durch einfaches Einrühren in die Überzugsmittel, die eine schmutzabweisende Wirkung zeigen sollen, eingearbeitet werden. Dabei können die Überzugsmittel auf dem Lacksektor übliche Lacksysteme sein. Überraschenderweise sind die erfindungsgemäßen Verbindungen sowohl für Lacksysteme auf Lösungsmittelbasis als auch auf Wasserbasis geeignet.

Die flüssige Phase kann auch in Form von Monomeren oder niedermolekularen Verbindungen vorliegen, die mit anderen Bindemittelkomponenten unter Bildung der Lacküberzüge reagieren. Die Lacke gemäß der Erfindung können auch sogenannte Pulverlacke sein, die also keine flüssige Phase enthalten und in Form von Pulvern auf die zu beschichtenden Substrate aufgebracht und dort zum Reagieren gebracht werden.

Den Überzugsmitteln können zur Herstellung übliche Additive zugesetzt werden, wie sie beispielsweise auf dem Lacksektor üblich sind. Beispiele für solche Additive sind Pigmente, beispielsweise deckende, farbgebende Pigmente, wie Titandioxide oder Ruß und Effektpigmente, wie Metallschuppenpigmente und/oder Perlglanzpigmente oder transparente Pigmente.

Andere Beispiele für Additive sind Füllstoffe, wie z. B. Talkum und Silikate, Weichmacher, Stabilisatoren, Lichtschutzmittel und Verlaufsmittel, wie Silikonöle.

Die gewünschte Applikationsviskosität der mit den erfindungsgemäßen Verbindungen hergestellten Überzugsmittel kann durch entsprechende Regelung des Zusatzes von Lösemitteln und/oder Wasser und/oder Additiven eingestellt werden.

Die Aushärtung von aus den Überzugsmitteln erstellten Überzügen ist abhängig von der jeweiligen Art der Vernetzungsreaktion und kann in einem weiten Temperaturbereich von beispielsweise -10 °C bis 200 °C erfolgen.

Überraschenderweise zeigen die erfindungsgemäßen Verbindungen auch bei Aushärtung bei Raumtemperatur einen guten Antigraffiti-Effekt.

Die aus den erfindungsgemäßen Verbindungen hergestellten Überzugsmittel sind für Überzüge geeignet, die auf einer Vielzahl von Substraten haften, wie beispielsweise Holz, Kunststoff, Glas, Keramik, Textilien, Putz, Zement und insbesondere Metall. Die Überzugsmittel können auch im Mehrschichtverfahren eingesetzt werden. Sie können beispielsweise auf übliche Grundierungen, Basislacke, Füller oder bereits vorhandene Decklacke aufgetragen werden.

Die erfindungsgemäßen Verbindungen eignen sich besonders günstig für Überzugsmittel, die eine schmutzabweisende Wirkung haben sollen. Die vorliegende Erfindung betrifft somit auch die Verwendung der erfindungsgemäßen Verbindungen in Decklacken oder Klarlacken.

Mit den erfindungsgemäßen Verbindungen erhält man eine hohe schmutzabweisende Wirkung, wobei die schmutzabweisende Wirkung (z. B. Antigraffiti-Wirkung) über lange Zeiträume selbst unter ungünstigen Bewitterungsbedigungen erhalten bleibt. Auch nach mehrmaliger Reinigung der Überzugsmitteloberfläche, beispielsweise durch Lösungsmittel, handelsüblichen Graffitientfernern oder Abkratzen bleibt die schmutzabweisende Wirkung erhalten.

Das erfindungsgemäße Überzugsmittel kann in üblicher Weise appliziert werden, beispielsweise durch Tauchen, Spritzen, Streichen oder auf elektrostatischem Wege.

Zur Erläuterung der Erfindung dienen die folgenden Beispiele.

### Beispiel 1

### Anlagerung von 1,4-Butandiolmonovinylether an ein seitenständig Si-H-funktionelles Siloxan

In einem Dreihalskolben, der mit einem Intensivkühler, Thermometer und Tropftrichter sowie einem Stickstoffanschluß ausgerüstet ist, werden 116,16 g 1,4-Butandiolmonovinylether auf 100 °C aufgeheizt und bei dieser Temperatur 10 ppm Platinkatalysator zugegeben und 0,05 Gew.-% n-Butylethanolamin. Innerhalb von 20 Min. werden bei dieser Temperatur 282,0 g seitenständig Si-H-funktionelles Siloxan 2 zugetropft, so daß die Reaktionstemperatur 110 °C nicht übersteigt. Nach 3 Std. liegt der Umsatz > 99,5 %. Das Produkt wird nach Abkühlen auf Raumtemperatur filtriert.

Gemäß ²⁹Si-NMR- und ¹³C-NMR-spektroskopischer Resultate besitzt das Endprodukt nachfolgende Struktur

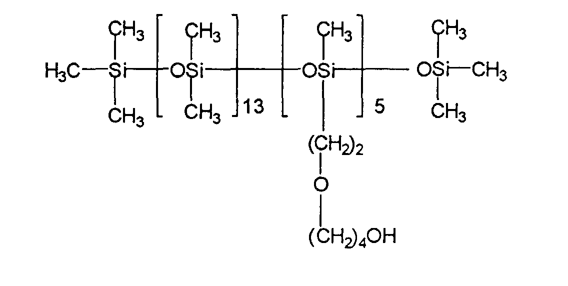

### Beispiel 2

### Anlagerung von 1,4-Butandiolmonovinylether an ein seitenständig Si-H-funktionelles Siloxan

116,16 g 1,4-Butandiolmonovinylether werden auf 100 °C aufgeheizt. Nach Zugabe von 10 ppm Platinkatalysator und 0,05 Gew.-% n-Butylethanolamin werden insgesamt 219,0 g seitenständig Si-H-funktionelles Siloxan 1 zugetropft. Die Zutropfdauer beträgt 2 Std. Nach 5 Std. Rühren bei 100 °C liegt der Umsatz > 99,5 %. Das Produkt wird nach Abkühlen auf Raumtemperatur filtriert.

Gemäß ²⁹Si-NMR- und ¹³C-NMR-spektroskopischer Ergebnisse besitzt das Endprodukt nachfolgende Struktur

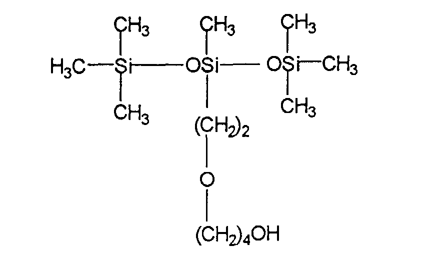

### Beispiel 3

### Anlagerung von 1,4-Butandiolmonovinylether an ein seitenständig Si-H-funktionelles Siloxan

90,6 g 1,4-Butandiolmonovinylether werden auf 100 °C aufgeheizt. Nach Zugabe von 10 ppm Platinkatalysator und 0,05 Gew.-% n-Butylethanolamin werden insgesamt 638,0 g seitenständig Si-H-funktionelles Siloxan 7 zugetropft. Die Zutropfdauer beträgt 2 Std. Nach 6,5 Stunden Rühren bei 100 °C liegt der Umsatz > 99,5 %. Das Produkt wird nach Abkühlen auf Raumtemperatur filtriert.

Gemäß ²⁹Si-NMR- und ¹³C-NMR-spektroskopischer Ergebnisse besitzt das Endprodukt nachfolgende Struktur

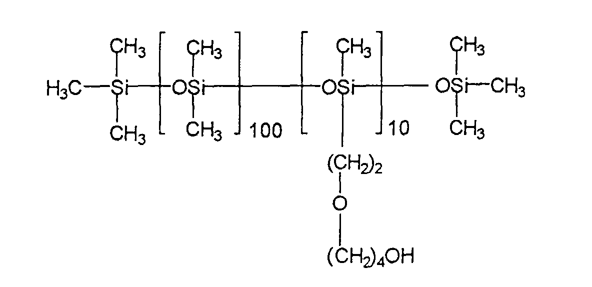

### Beispiel 4

### Ethoxylierung eines Hydroxyalkylsiloxans

In einem Reaktionsgefäß mit Rührer, Tropftrichter und Thermometer werden unter Stickstoffatmosphäre 169 g seitenständiges Hydroxyalkylsiloxan, wie unter Beispiel 2 synthetisiert, zusammen mit 2,5 Mol-% Natriummethylat und 2,5 Mol-% Kaliummethylat vorgelegt und auf 110 °C aufgeheizt. Bei dieser Temperatur werden insgesamt 92,2 g Ethylenoxid zugetropft. Es wird anschließend noch 2 Stunden bei Temperatur gehalten. Zur Neutralisation des Rohproduktes wird wäßrige Natriumhydrogenphosphat-Lösung zudosiert und anschließend filtriert.

Gemäß ²⁹Si-NMR- und ¹³C-NMR-spektroskopischer Ergebnisse besitzt das Endprodukt nachfolgende Struktur

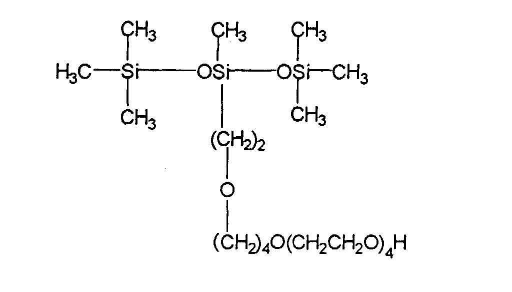

### Beispiel 5

### Umsetzung eines Hydroxyalkylsiloxans mit einem Isocyanat

In einem Reaktionsgefäß mit Rührer und Thermometer werden unter Stickstoffabdeckung 66,7 g Isophorondiisocyanat, 256,5 g seitenständiges Hydroxyalkylsiloxan (Anlagerungsprodukt von 1,4-Butandiolmonovinylether an das seitenständig Si-H-funktionelle Siloxan 3) und 1,6 g einer 5 %igen Dibutylzinnlauratlösung in Xylol zusammengegeben und auf 25 °C erwärmt. Bei dieser Temperatur läßt man 2 h reagieren. Gemäß spektroskopischer Daten (²⁹Si-NMR und ¹³C-NMR) hat das so erhaltene Produkt nachfolgende Struktur

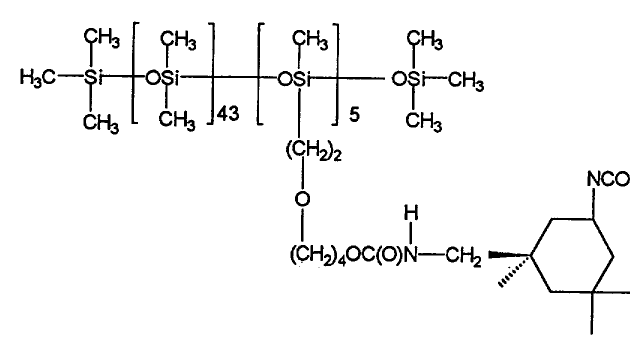

### Beispiel 6

### Acrylierung eines Hydroxyalkylsiloxans

In einem Reaktionsgefäß mit Rührer, Tropftrichter und Thermometer werden unter Stickstoffatmosphäre 0,17 val seitenständiges Hydroxyalkylsiloxan mit einer OH-Zahl von 64 zusammen mit 180 ml Cyclohexan und 100 ppm Methylhydrochinon auf 65 °C aufgeheizt. Bei dieser Temperatur werden 0,3 % Trifluormethansulfonsäure zugegeben und anschließend insgesamt 0,17 val Acrylsäure zugetropft. Das Kondensationswasser wird mittels eines Wasserabscheiders abgetrennt. Die Reaktionsdauer beträgt ca. 3 Stunden. Anschließend wird das Reaktionsgemisch mit einer 2 %igen Natriumcarbonatlösung neutralisiert, filtriert und destilliert (80 °C; 10 Torr).

Gemäß ²⁹Si-NMR- und ¹³C-NMR-spektroskopischer Ergebnisse besitzt das Endprodukt nachfolgende Struktur:

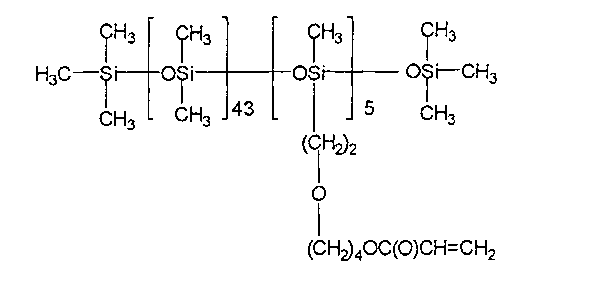

### Beispiel 7

### Umsetzung eines Hydroxyalkylsiloxans mit ε-Caprolacton

In einem Dreihalskolben mit aufgesetztem Rückflußkühler und KPG-Rührer werden 65,0 g Hydroxyalkylsiloxan (wie in Beispiel 1 beschrieben) zusammen mit 16,5 g ε-Caprolacton und 0,12 g Zinndioctoat auf 90 °C erhitzt. Insgesamt wird das Reaktionsgemisch 7 Std. bei dieser Temperatur reagieren lassen. Bei 120 °C wird das Produkt destillativ von überschüssigem Caprolacton befreit.

Gemäß ²⁹Si-NMR- und ¹³C-NMR-spektroskopischer Ergebnisse besitzt das Endprodukt nachfolgende Struktur

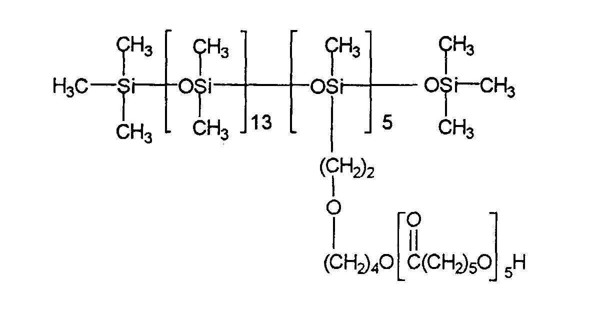

### Herstellung von Lacken

Alle Teile (T) beziehen sich auf das Gewicht.

### Lackbeispiel Ia

| | |
|---|---|
| 50 T | Macrynal VSM 1565 (70 %) |
| 1 T | Methoxypropylacetat |
| 1,5 T | Solvesso 100 |
| 5 T | Butylacetat |
| 0,6 T | Dibutylzinndilaurat (1 % in Xylol) |
| 36 T | Kronos RW 59 |
| 1 T | Verbindung von Beispiel 3 |
| 4 T | Butylactat |
| 1 T | handelsüblicher Isocyanathärter |

werden nacheinander homogen miteinander vermischt. Anschließend wird mit einer Trockenfilmstärke von 30 bis 100 µm auf einer handelsüblichen Grundierung appliziert. Der Lack wird 7 Tage bei Raumtemperatur gehärtet. Alternativ kann 16 Stunden bei 60 °C gehärtet werden.

### Vergleichsversuch A

Es wird wie in Beispiel Ia verfahren, wobei die erfindungsgemäße Verbindung aus Herstellbeispiel 3 durch das a,ω-hydroxyalkylfunktionelle Polydimethylsiloxan Tegopren H-Si 2111 (Th. Goldschmidt AG) ersetzt wird.

### Vergleichsversuch B

Es wird wie in Beispiel Ia verfahren, wobei die erfindungsgemäße Verbindung aus Herstellbeispiel 3 durch das Silikoncaprolacton Byk 370 (BYK) ersetzt wird.

Es werden folgende Untersuchungen durchgeführt:

### Enthaftung:

Ein Bonderblech wird nach der Lackaushärtung mit handelsüblichen Spraydosenlacken besprüht. Nach Trocknung dieser Lackschicht wird diese Fläche mit Klebeband versehen. Durch Abreißen des Bandes wird die Spraydosenschicht entfernt.
1 = sehr gute Sprühdosenlack-Haftung
2 = gute Sprühdosenlack-Haftung
3 = keine Sprühdosenlack-Haftung

### Filzschreiberresistenz:

Das Objekt wird nach der Lackaushärtung mit handelsüblichem Filzschreiber beschrieben. Nach Trocknung wird mit einem trokkenen Papiertaschentuch der Filzschreiber durch Reiben entfernt.
1 = keine Entfernbarkeit des Filzschreibers
2 = schwere Entfernbarkeit des Filzschreibers
3 = leichte Entfernbarkeit des Filzschreibers

### Chemikalienbeständigkeit:

Die Chemikalientests erfolgen mit den Lösungsmitteln Xylol, Ethylglycol und Methoxypropylacetat nach DIN 53 168.

### Nach 100 WOM:

Die Enthaftungsprüfung und die Filzschreiberresistenz werden nach 100 Stunden Weatherometer (WOM)-sunshine-Prüfung geprüft.

Nach 2 Tagen Trocknung bei Raumtemperatur:

| Lackbeispiel | Filzschreiberresistenz | | Enthaftung | | Chemikalienbeständigkeit |
|---|---|---|---|---|---|
| | 48 h nach 100h | | 48h nach 100h | | |
| | RT | WOM | RT | WOM | |
| Ia | 3 | 3 | 3 | 3 | i.O. |
| Vergleichsversuch A | 1 | 1 | 1 | 1 | i.O. |
| Vergleichsversuch B | 1 | 1 | 1 | 1 | i.O. |

Nach 7 Tagen Trocknung bei Raumtemperatur:

| Lackbeispiel | Filzschreiberresistenz | | Enthaftung | | Chemikalienbeständigkeit |
|---|---|---|---|---|---|
| | 48 h nach 100h | | 48h nach 100h | | |
| | RT | WOM | RT | WOM | |
| Ia | 3+ | 3+ | 3+ | 3+ | i.O. |
| Vergleichsversuch A | 2 | 2 | 2 | 2 | i.O. |
| Vergleichsversuch B | 1 | 1 | 1 | 1 | i.O. |

### Lackbeispiel Ib

| | |
|---|---|
| 50 T | Macrynal VSM 1565 (70 %) |
| 1 T | Methoxypropylacetat |
| 1,5 T | Solvesso 100 |
| 5 T | Butylacetat |
| 0,6 T | Dibutylzinndilaurat (1 % in Xylol) |
| 1 T | Verbindung von Beispiel 3 |
| 4 T | Butylacetat |
| 1 T | handelsüblicher Isocyanathärter |

werden analog zu Lackbeispiel Ia verarbeitet.

### Lackbeispiel Ic

| | |
|---|---|
| 50 T | Bayhydrol VPLS 2139 |
| 1 T | Surfinol 104 E (50 %) |
| 5,5 T | Acrysol RM8 (18 % in Ethanol) |
| 24 T | Bayertitan RKB-4 |
| pH 7,5 | mit DMEA |
| 35 T | vollentsalztes Wasser |

werden mit einer Perlmühle homogen miteinander vermischt und mit vollentsalztem Wasser auf eine Auslaufzeit von 85" DIN 4 cup eingestellt. Anschließend wird mit einer Trockenfilmstärke von 30 bis 100 µm auf einer handelsüblichen Grundierung appliziert. Der Lack wird 7 Tage bei Raumtemperatur gehärtet. Alternativ kann 16 Stunden bei 60 °C gehärtet werden.

Aus den vorgenannten Beispielen ist die Überlegenheit der erfindungsgemäßen Verbindungen hinsichtlich der Erzielung eines permanenten Anti-Graffiti-Effektes leicht ersichtlich.

## Patentansprüche

1. Organopolysiloxane der allgemeinen Formel 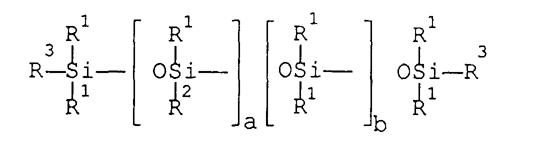 wobei
R¹ = gleiche oder verschiedene aliphatische oder aromatische Kohlenwasserstoffreste sind,
R² = CH₂CH₂O(CR⁴R⁵)ₓOH ist, wobei
R⁴ und R⁵ gleiche oder verschiedene Reste sein können und jeweils einen H- oder Alkylrest, verzweigt oder unverzweigt mit bis zu insgesamt 12 C-Atomen bedeuten und x einen Wert von 2 bis 11 hat,
R³ = R² oder R¹ ist,
a = 1 bis 50 und
b = 0 bis 500 ist.

2. Organopolysiloxane gemäß Anspruch 1, wobei a = 5 bis 20 ist.

3. Organopolysiloxane gemäß Anspruch 1, wobei b = 6 bis 500 ist.

4. Organopolysiloxane gemäß Anspruch 1, wobei b = 50 bis 150 ist.

5. Organopolysiloxane gemäß Anspruch 1, wobei R¹ ein Methylrest ist.

6. Organopolysiloxane gemäß Anspruch 1, wobei R⁴ = R⁵ = Wasserstoff ist.

7. Organopolysiloxane gemäß Anspruch 1, wobei x = 3 bis 6 ist.

8. Organopolysiloxane gemäß Anspruch 1, wobei x = 4 ist.

9. Verfahren zur Herstellung der Organopolysiloxane gemäß Anspruch 1 bis 8, dadurch gekennzeichnet, daß man wasserstoffunktionelle Siloxane der allgemeinen Formel 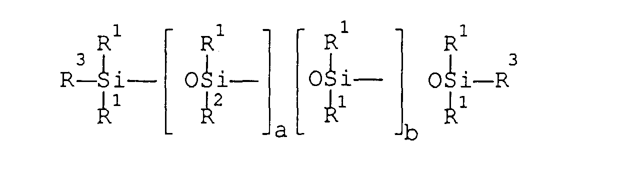 wobei
R² = H ist,
und die übrigen Indices die obengenannte Bedeutung haben,
an Alkandiolmonovinylether der allgemeinen Formel 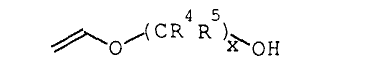 wobei R⁴ und R⁵ gleiche oder verschiedene Reste sein können und jeweils einen H- oder Alkylrest, verzweigt oder unverzweigt, mit bis zu insgesamt 12 C-Atomen bedeuten und x einen Wert von 2 bis 11 hat,
in Gegenwart eines an sich bekannten Hydrosilylierungskatalysators anlagert.

10. Verwendung der Organopolysiloxane gemäß Anspruch 1 bis 8 als Zwischenprodukt für die Herstellung von organomodifizierten Siliconderivaten, insbesondere Siliconpolyethern, Siliconpolyestern, Siliconacrylaten oder Siliconisocyanaten.

11. Verwendung der Organopolysiloxane gemäß Anspruch 1 bis 8 als Zusatzstoffe in Lacken und Druckfarben in Einsatzkonzentrationen von 0,01 bis 15 %.

12. Überzugsmittel zur Herstellung schmutzabweisender Überzüge, enthaltend eine oder mehrere der Verbindungen gemäß Anspruch 3.

13. Überzugsmittel nach Anspruch 12, dadurch gekennzeichnet, daß es ein oder mehrere lackübliche Lösungsmittel enthält.

14. Überzugsmittel nach Anspruch 12, dadurch gekennzeichnet, daß es sich um ein wäßriges Überzugsmittel handelt, das ein oder ein oder mehrere organische Lösungsmittel enthalten kann.

15. Überzugsmittel nach Anspruch 12, dadurch gekennzeichnet, daß die flüssige Phase in Form von Monomeren oder niedermolekularen Verbindungen vorliegt.

16. Überzugsmittel nach Anspruch 12, dadurch gekennzeichnet, daß es sich um einen Pulverlack handelt.

## Claims

1. Organopolysiloxanes of the general formula in which 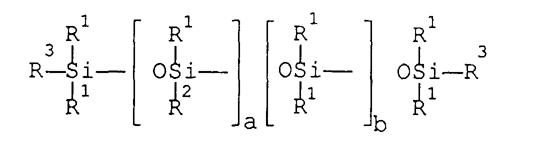
R¹ = identical or different aliphatic or aromatic hydrocarbon radicals,
R² = CH₇CH₂O(CR⁴R⁵)ₓOH, where
R⁴ and R⁵ can be identical or different radicals and are each a H or alkyl radical, branched or unbranched, having up to a total of 12 C atoms, and x has a value from 2 to 11,
R³ = R² or R¹,
a = 1 to 50 and
b = 0 to 500.

2. Organopolysiloxanes according to Claim 1, where a = 5 to 20.

3. Organopolysiloxanes according to Claim 1, where b = 6 to 500.

4. Organopolysiloxanes according to Claim 1, where b = 50 to 150.

5. Organopolysiloxanes according to Claim 1, where R¹ is a methyl radical.

6. Organopolysiloxanes according to Claim 1, where R⁴ = R⁵ = hydrogen.

7. Organopolysiloxanes according to Claim 1, where x = 3 to 6.

8. Organopolysiloxanes according to Claim 1, where x = 4.

9. Process for preparing the organopolysiloxanes according to Claim 1 to 8, characterized in that hydrogen-functional siloxanes of the general formula 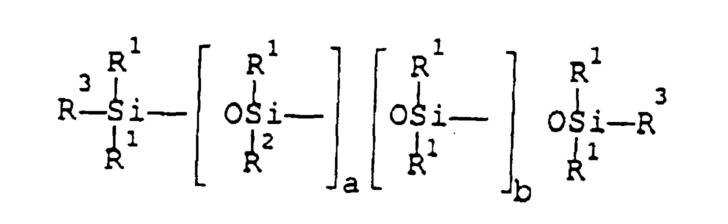 in which
R² = H
and the other indices are as defined above
are subjected to an addition reaction with alkanediol monovinyl ethers of the general formula 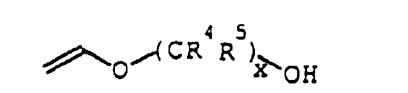 in which R⁴ and R⁵ can be identical or different radicals and are each a H or alkyl radical, branched or unbranched, having up to a total of 12 C atoms, and x has a value from 2 to 11,
in the presence of a conventional hydrosilylation catalyst.

10. Use of the organopolysiloxanes according to Claim 1 to 8 as intermediate for the preparation of organomodified silicone derivatives, especially silicone polyethers, silicone polyesters, silicone acrylates or silicone isocyanates.

11. Use of the organopolysiloxanes according to Claim 1 to 8 as additives in paints and printing inks in use concentrations of from 0.01 to 15%.

12. Coating composition for producing dirt-repelling coatings, comprising one or more of the compounds according to Claim 3.

13. Coating composition according to Claim 12, characterized in that it comprises one or more customary paint solvents.

14. Coating composition according to Claim 12, characterized in that it is an aqueous coating composition which can comprise one or more organic solvents.

15. Coating composition according to Claim 12, characterized in that the liquid phase is in the form of monomers or low molecular mass compounds.

16. Coating composition according to Claim 12, characterized in that it is a powder coating.

## Revendications

1. Organopolysiloxanes de formule générale 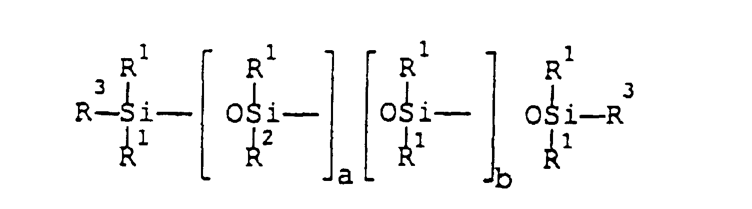 dans laquelle
R¹ = des radicaux hydrocarbonés aliphatiques ou aromatiques identiques ou différents,
R² = CH₂CH₂O(CR⁴R⁵)ₓOH, dans laquelle
R⁴ et R⁵ peuvent être des radicaux identiques ou différents et signifient dans chaque cas un radical H ou alkyle, ramifié ou non ramifié, avec jusqu'à un total de 12 atomes de carbone et x a une valeur de 2 à 11,
R³ = R² ou R¹,
a = 1 à 50, et

2. Organopolysiloxanes selon la revendication 1, dans lesquels a = 5 à 20.

3. Organopolysiloxanes selon la revendication 1, dans lesquels b = 6 à 500.

4. Organopolysiloxanes selon la revendication 1, dans lesquels b = 50 à 150.

5. Organopolysiloxanes selon la revendication 1, dans lesquels R¹ est un radical méthyle.

6. Organopolysiloxanes selon la revendication 1, dans lesquels R⁴ = R⁵ = hydrogène.

7. Organopolysiloxanes selon la revendication 1, dans lesquels x = 3 à 6.

8. Organopolysiloxanes selon la revendication 1, dans lesquels x = 4.

9. Procédé de préparation des organopolysiloxanes selon les revendications 1 à 8, caractérisé en ce qu'on fixe par addition des siloxanes à fonction hydrogène de formule générale 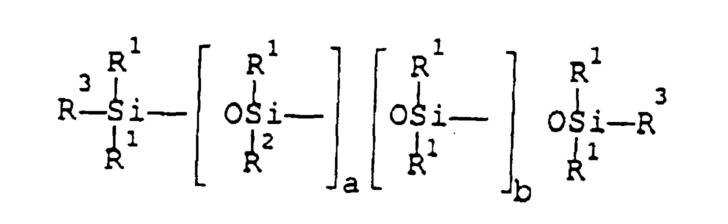 dans laquelle
R² = H,
et les autres indices ont la signification précitée,
sur un éther monovinylique d'alcanediol de formule générale 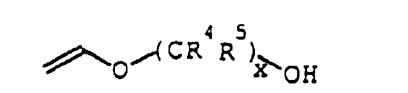 dans laquelle R⁴ et R⁵ peuvent être des radicaux identiques ou différents et signifient dans chaque cas un radical H ou alkyle, ramifié ou non ramifié, avec jusqu'à un total de 12 atomes de carbone et x a une valeur de 2 à 11,
en présence d'un catalyseur d'hydrosilylation connu en soi.

10. Utilisation des organopolysiloxanes selon les revendications 1 à 8 comme produit intermédiaire pour la préparation de dérivés de silicone organomodifiés, en particulier des poly(éthers de silicone), des poly(esters de silicone), des acrylates de silicone ou des isocyanates de silicone.

11. Utilisation des organopolysiloxanes selon les revendications 1 à 8 comme additifs dans des laques et des encres d'imprimerie en concentrations d'usage de 0,01 à 15%.

12. Agent d'enduction pour la production d'enduits antisalissures contenant un ou plusieurs des composés selon la revendication 3.

13. Agent d'enduction selon la revendication 12, caractérisé en ce qu'il contient un ou plusieurs solvants habituels dans des laques.

14. Agent d'enduction selon la revendication 12, caractérisé en ce qu'il s'agit d'un agent d'enduction aqueux, qui peut contenir un ou plusieurs solvants organiques.

15. Agent d'enduction selon la revendication 12, caractérisé en ce que la phase liquide se présente sous forme de monomères ou de composés de faible poids moléculaire.

16. Agent d'enduction selon la revendication 12, caractérisé en ce qu'il s'agit d'une laque pulvérulente.
